# EUROPÄISCHE PATENTSCHRIFT

(11) **EP 3 842 633 B1**
(45) Veröffentlichungstag und Bekanntmachung des Hinweises auf die Patenterteilung: **10.01.2024**
(21) Anmeldenummer: 20209392.8
(22) Anmeldetag: 24.11.2020
(51) Int. Cl.: F03D 7/02

(54) **VERFAHREN ZUM BETREIBEN EINER WINDENERGIEANLAGE, WINDENERGIEANLAGE UND WINDPARK**
METHOD FOR OPERATING A WIND TURBINE, WIND TURBINE AND WIND FARM
PROCÉDÉ DE FONCTIONNEMENT D'UNE ÉOLIENNE, ÉOLIENNE ET PARC ÉOLIEN

(30) Priorität: 23.12.2019 DE 102019135754
(43) Veröffentlichungstag der Anmeldung: 30.06.2021
(73) Patentinhaber: Wobben Properties GmbH, 26607 Aurich (DE)
(72) Erfinder: Messing, Ralf, 26605 Aurich (DE); Schwarz, Carl Michael, 26123 Oldenburg (DE)
(74) Vertreter: Eisenführ Speiser

(56) Entgegenhaltungen:
- DE-A1-102018 100 127
- US-A1- 2018 223 803

## Beschreibung

Die vorliegende Erfindung betrifft ein Verfahren zum Betreiben einer Windenergieanlage, eine zugehörige Windenergieanlage und einen Windpark.

Windenergieanlagen sind bekannt, die mit einem aerodynamischen Rotor mit wenigstens einem Rotorblatt Energie aus dem Wind entnehmen und in elektrische Energie umwandeln. Die elektrische Energie wird dann beispielsweise in ein elektrisches Versorgungsnetz eingespeist.

In diesem Zusammenhang ist auch bekannt, dass aufgrund von Anforderungen der Netzbetreiber der elektrischen Versorgungsnetze nur eine gedrosselte Einspeiseleistung der Windenergieanlage angefragt bzw. gefordert wird, um eine Überlastung der Stromnetze zu verhindern.

Nach Stand der Technik wir in diesem Fall auf einer Betriebskennlinie eines leistungsoptimierten Betriebsmodus, insbesondere einer Drehzahl-Leistungskennlinie, die Drehzahl so lange reduziert, bis sich das gewünschte bzw. geforderte reduzierte Nennleistungsniveau einstellt. Dies hat dann zwangsläufig zur Folge, dass leistungsreduzierte Betriebsmodi stets geringere Nenndrehzahlen aufweisen als der leistungsoptimierte Betriebsmodus.

Die Nennleistung wird bei der sogenannten Nennwindgeschwindigkeit erreicht und es ist leicht nachvollziehbar, dass die Nennwindgeschwindigkeit für den leistungsreduzierten Betriebsmodus kleiner ist als für den leistungsoptimalen Modus. Bei Windgeschwindigkeiten über der Nennwindgeschwindigkeit regelt die Anlage auf die Nenndrehzahl Nₛₒₗₗ beispielsweise durch Pitchen der Rotorblätter, unabhängig von der Windgeschwindigkeit. In einem beispielhaften Sturmbetrieb, der ab einer vordefinierten Windgeschwindigkeit einsetzt, regelt die Anlage auf eine windgeschwindigkeitsabhängige Drehzahl, die im Sturmbetrieb von der Nenndrehzahl bis auf eine Trudeldrehzahl abfällt.

Es ist bekannt, dass bei abnehmender Leistungsumsetzung am Rotorblatt und zunehmenden Windgeschwindigkeiten sich eine Anstellwinkelverteilung am Rotorblatt einstellt, die dergestalt ist, dass die Anstellwinkel im Innenblattbereich gegenüber dem Normalbetrieb zunehmen und die Anstellwinkel im Außenblattbereich abnehmen. Von der mit der Windgeschwindigkeit zunehmenden anfallenden kinetischen Energie des Windes muss im abgeregelten Betrieb ein immer kleiner werdender Anteil in Rotationsenergie der Rotorblätter umgewandelt werden.

Der Antriebsmoment wird bei hohen Windgeschwindigkeiten und geringen Nennleistungen nur noch im Innenblatt erzeugt, während am Außenblatt keine bzw. eine geringe Leistungsumsetzung stattfindet. Dabei können am Außenblatt betragsmäßig so große (negative) Anstellwinkel auftreten, dass die Gefahr der Strömungsablösung auf der Druckseite besteht.

Diese druckseitige Strömungsablösung kann sehr schlagartig auftreten, sobald gewisse Grenzanstellwinkel unterschritten werden. Dabei kann es zu einer signifikanten Lärmentwicklung und ggf. zu aeroelastischen Instabilitäten kommen, beides Phänomene, die es unbedingt zu vermeiden gilt.

Es ist daher anzustreben, die Anlage nicht so zu betreiben, dass eine Strömungsablösung auf der Druckseite, auch als negativer Stall bezeichnet, der Rotorblattprofile auftritt. Ob auf dem Rotorblatt Profilschnitte vorkommen, bei denen die Gefahr des negativen Stalls im Anlagenbetrieb bei reduzierten Nennleistungen und hohen Windgeschwindigkeiten gegeben ist, hängt zum einen natürlich von den charakteristischen Eigenschaften der verwendeten Rotorblattprofile ab und zum anderen auch von der Rotorblattauslegung. So erhöht zum Beispiel die Anwendung des sogenannten back-twist die Gefahr des negativen Stalls in den abgeregelten Betriebspunkten erheblich. Unter back-twist versteht man die deutliche Anhebung der Rotorblattverwindung, die je nach Auslegungsvorgehen bis zu etwa 7° beträgt, auf den letzten 5% des Rotorblattes zur Blattspitze hin. Dieses Auslegungsvorgehen wird gerne verwendet, um die Anlagenlasten zu reduzieren. Die Entlastung des Blattspitzenbereiches führt dann aber zwangsläufig zu stark verringerten Anstellwinkel im Blattspitzenbereich und im abgeregelten Betrieb zum unerwünschten Auftreten vom negativen Stall. Der Rotorblattentwickler ist daher in seinen Handlungsspielräumen eingeschränkt und kann ggf. lastreduzierende Maßnahmen wie back-twist nur eingeschränkt einsetzen. Alternativ müsste die Anlage schon vorzeitig im abgeregelten Betrieb abgeschaltet werden, was wiederrum die Verfügbarkeit der Anlagen in Starkwindszenarien in nicht akzeptabler Weise reduziert.

Das Deutsche Patent- und Markenamt hat in der Prioritätsanmeldung zu vorliegender Anmeldung folgenden Stand der Technik recherchiert: US 2010/0021296 A1, US 2014/0112780 A1, US 2018/0223803 A1 und WO 2018/145715 A1.

Es war daher eine Aufgabe der vorliegenden Erfindung, eine Windenergieanlage sowie ein zugehöriges Verfahren zum Betreiben einer Windenergieanlage vorzuschlagen, die einen ruhigen und aerodynamisch stabilen Betrieb insbesondere mit reduzierter Nennleistung gewährleisten.

Gemäß einem Aspekt wird ein Verfahren zum Betreiben einer Windenergieanlage vorgeschlagen, das im Anspruch 1 definiert ist.

Die Erfindung dient dem Zweck, beim Betrieb der Windenergieanlage Betriebszustände mit Strömungsablösung auf der Druckseite eines Rotorblattprofiles zu vermeiden. Diese Strömungsablösung kann aeroelastische Phänomene nach sich ziehen, die zu Rotorblattschwingungen führen, die wiederum zu erhöhten Anlagenlasten führen können. Weiterhin dient die Erfindung dem Zweck, stark erhöhte Schallemissionen im Starkwind/Sturmbetrieb der Anlage zu vermeiden.

Es wird daher hier der Vorschlag unterbreitet, einen Indikator zu etablieren, der die Gefahr des negativen Stalls rechtzeitig und zuverlässig erkennt, um ggf. Maßnahmen einzuleiten, die diese Gefahr wieder reduzieren wie zum Beispiel eine modifizierte Betriebsführung. Da die Strömungsablösung auf der Druckseite sehr schlagartig auftreten kann, und die sich damit verbundenen negativen Auswirkungen sehr unvermittelt einstellen, ist es umso wichtiger, einen gut erfassbaren Indikator zu verwenden, um präzise geplante Maßnahmen einzuleiten.

Es ist naheliegend, die Windgeschwindigkeit als Indikator für die einsetzende Strömungsablösung zu verwenden und die Windgeschwindigkeit wird tatsächlich auch im Stand der Technik eingesetzt, um in der Sturmregelung die Anlage zu regeln. Die Windgeschwindigkeit kann beispielsweise mit Hilfe eines auf der Gondel angebrachten Anemometers ermittelt werden und aufgrund von Simulationen ist bekannt, bei welcher Windgeschwindigkeit sich kritische negative Anstellwinkel am Rotorblatt einstellen. Das Problem bei diesem Vorgehen ist jedoch, dass mit der Windgeschwindigkeitsmessung am Gondelanemometer nicht exakt die Windgeschwindigkeit in der freien Anströmung ermittelt wird. Die Windgeschwindigkeit am Anemometer muss aufgrund der Leistungsentnahme in der Rotorebene, die sich stromauf des Gondelanemometers befindet, korrigiert werden. Diese Korrekturfunktion ist unter anderem eine Funktion der Windgeschwindigkeit, der Drehzahl des Rotors und des Pitchwinkels. Da eine Vielzahl von abgeregelten Betriebsmoden existiert, vom Netzbetreiber wird u.U. die Funktionalität der stufenlosen Abregelung gefordert, ist es in der Praxis nahezu unmöglich die Korrekturfunktionen in der notwendigen Genauigkeit zu ermitteln.

Der Betriebspunkt ist in diesem Zusammenhang ein bestimmter Punkt im Kennfeld oder auf der Kennlinie der Windenergieanlage, der aufgrund der Systemeigenschaften und einwirkenden äußeren Einflüsse und Parameter eingenommen wird. Beispielsweise kann der Betriebspunkt eine Anlagendrehzahl, eine erzeugte elektrische Leistung, einen Pitchwinkel und ähnliches umfassen. Als Betriebsführung wird hier insbesondere die steuerungs- bzw. regelungstechnische Implementierung zur Einstellung des Betriebspunktes verstanden.

Vorzugsweise wird der Pitchwinkel gemessen oder bestimmt, insbesondere durch eine eingestellte Position einer Pitchverstelleinrichtung bestimmt. Üblicherweise liegt der Pitchwinkel in einer Windenergieanlage bereits als Messgröße vor und muss demnach nicht umständlich und/oder fehlerbehaftet durch weitere Verfahren bestimmt werden, wie beispielsweise die Windgeschwindigkeit.

Durch die Verwendung des Pitchwinkels als Indikator kann ein Strömungsabriss auf der Druckseite des Rotorblattes effektiv verhindert werden.

In einer bevorzugten Ausgestaltung wird für mehrere Betriebspunkte der Windenergieanlage, insbesondere für mehrere Drehzahlen der Windenergieanlage, ein kritischer Wert des Indikators, bei dem das Auftreten der Strömungsablösung auf der Druckseite einsetzt, bereitgestellt und das Verfahren umfasst weiter ein Vergleichen eines aktuellen Indikatorwertes mit einem kritischen Indikatorwert für den aktuellen Betriebspunkt, wobei der Schritt des Veränderns der Betriebsführung erfolgt, sobald eine Differenz zwischen dem Indikatorwert und dem kritischen Indikatorwert einen vorbestimmten Sicherheitswert unterschreitet.

Es wird daher der Pitchwinkel als Indikator und Auslösekriterium für Regelstrategien vorgeschlagen, um das Auftreten des negativen Stalls zu vermeiden. Die Regelstrategien, die ein Verändern des Betriebspunktes der Windenergieanlage zur Folge haben, finden insbesondere bei hohen Windgeschwindigkeiten im Volllastbereich, wie z.B. aber nicht ausschließlich eine Drehzahlerhöhung bei leistungsreduzierten Betrieben oder der Sturmregelung, Anwendung. Der Pitchwinkel liegt der Anlage bereits als Messgröße vor und die kritischen Pitchwinkel, bei denen kritische Anstellwinkel erreicht werden, lassen sich mit wenig aufwändigen Simulationsverfahren im Vorfeld sehr exakt bestimmen. Wird ein kritischer Pitchwinkel erreicht, lassen sich modifizierte Betriebsführungen einleiten, um z.B. die Gefahr des negativen Stalls wieder zu reduzieren.

Die kritischen Werte des Indikators werden daher vorzugsweise in tabellarischer Form oder als Funktion in der Anlagensteuerung der Windenergieanlage bereitgestellt. Die Werte lassen sich experimentell oder, einfacher, über eine Simulation beispielsweise mittels des kritischen Anstellwinkels, insbesondere im Außenblattbereich, ermitteln. Zwischen den tabellierten Werten kann beispielsweise eine Interpolation stattfinden. Alternativ zu einer Interpolation ist es auch möglich, dass immer der niedrigere Wert des Indikators als kritischer Wert herangezogen wird. Damit wird die Sicherheit der Vermeidung des negativen Stalls weiter erhöht.

Der Sicherheitswert kann in einem Beispiel "0" betragen. In diesem Beispiel hat der bereitgestellte kritische Indikatorwert vorzugsweise bereits einen Sicherheitsabstand zu dem Wert, an dem tatsächlich die Strömungsablösung einsetzt. Ganz allgemein ist festzuhalten, dass durch die Verwendung des Pitchwinkels eine sehr genaue Vorhersage über das Eintreten des negativen Stalls getroffen werden kann, so dass der Sicherheitswert im Vergleich zu anderen Verfahren geringer ausfallen kann.

Der Sicherheitswert kann in allen Betriebspunkten identisch sein oder von weiteren Faktoren abhängen. Beispielsweise ist von Vorteil, wenn der Sicherheitswert von einer aktuellen Turbulenzintensität abhängt. In diesem Fall ist vorteilhaft, wenn eine größere Turbulenzintensität einen größeren Sicherheitswert mit sich bringt. Dadurch ist auch bei sehr turbulenten Windverhältnissen ein Betreiben ohne das Auftreten negativen Stalls möglich. Alternativ oder zusätzlich ist auch die Berücksichtigung weiterer Parameter möglich.

Vorzugsweise werden die kritischen Werte des Indikators aufgrund einer Anstellwinkelverteilung des Rotorblattes und einem kritischen Anstellwinkel bestimmt.

Der kritische Anstellwinkel, an dem eine Strömungsablösung auf der Druckseite auftritt, ist abhängig von dem Profil und der Position des Profils entlang der Rotorblattlängsachse. Beispielsweise kann der kritische Anstellwinkel in einem Bereich unter 0° liegen, wie etwa -8°. Auch ist der kritische Anstellwinkel von weiteren Faktoren abhängig, wie beispielsweise der Oberflächenbeschaffenheit etwa einem Verschmutzungszustand des Rotorblattes. Dem Fachmann sind sowohl die Bestimmung eines kritischen Anstellwinkels als auch die Einflüsse auf den kritischen Anstellwinkel experimentell und durch Simulationen wohl bekannt. Insofern in diesem Zusammenhang von Anstellwinkeln gesprochen wird, sind vorzugsweise die effektiven Anstellwinkel relevant.

Der kritische Indikatorwert entspricht einem kritischen Pitchwinkel. Demnach kann dann, wenn der Pitchwinkel unterhalb des kritischen Indikatorwertes gehalten wird, das Auftreten einer Strömungsablösung auf der Druckseite verhindert werden.

Vorzugsweise nimmt der kritische Indikatorwert mit ansteigender Drehzahl des Rotors ab. Erfindungsgemäß wurde erkannt, dass eine Erhöhung der Drehzahl zu einer größeren Toleranz des effektiven Anstellwinkels gegenüber sich verändernder Windgeschwindigkeiten führt, so dass erst eine deutlich höhere Windgeschwindigkeit zu kritischen Anstellwinkeln führt, die dann Strömungsablösungen auf der Druckseite nach sich ziehen.

Im Umkehrschluss muss der Pitchwinkel auf einem niedrigeren Wert gehalten werden, der kritische Indikatorwert ist also niedriger als bei einer niedrigeren Drehzahl. Dies ist besonders im leistungsreduzierten Betrieb vorteilhaft, da dort die Drehzahl üblicherweise unterhalb der Nenndrehzahl für den leistungsoptimierten Betrieb liegt, so dass hier Lasten und auftretende Geräusche durch die Drehzahlerhöhung reduziert werden können. Vorzugsweise ist der kritische Indikatorwert unabhängig von einer Höhe der reduzierten Nennleistung in einem abgeregelten Betrieb festgelegt und/oder steigt mit steigender Abregelung an.

Hierbei wurde festgestellt, dass der Grad der Abregelung nur einen untergeordneten Einfluss auf den kritischen Wert des Indikators hat. Beispielsweise kann der Unterschied zwischen einem leistungsoptimalen Betrieb und einem auf wenige Prozent der Nennleistung, also sehr stark abgeregelten Betrieb, im Bereich von wenigen Grad liegen, so dass eine Berücksichtigung in der Praxis zu vernachlässigen ist.

In diesem Fall wird vorzugsweise der kritische Wert des Indikators für den stark abgeregelten Betrieb herangezogen, da dieser um wenige Grad unterhalb des Wertes für den leistungsoptimierten Betrieb liegt, und damit in allen Stufen der Leistungsabregelung einen Betrieb ohne Strömungsablösung auf der Druckseite ermöglicht.

Vorzugsweise wird der kritische Indikatorwert in Abhängigkeit eines Profiloberflächenzustandes des Rotorblattes, insbesondere einer Verschmutzung, bereitgestellt.

Vorzugsweise zeigt der Indikator das Auftreten der Strömungsablösung in einem Außenbereich des Rotorblattes an, insbesondere in einem äußeren Bereich, der mehr als 70 % des Rotorradius, insbesondere mehr als 90 % des Rotorradius von einem Zentrum des Rotors aus entfernt ist. In diesem Bereich ist das Auftreten der Strömungsablösung auf der Druckseite zum einen besonders häufig, zum anderen sind damit in diesem Bereich die größten Lasten verbunden.

Erfindungsgemäß wird die Windenergieanlage in einem leistungsreduzierten Betrieb mit reduzierter Nennleistung betrieben.

Dadurch, dass in einem derartigen Betrieb die Drehzahl üblicherweise unterhalb der Nenndrehzahl für den leistungsoptimierten Betrieb liegt, kann das erfindungsgemäße Verfahren hier Lasten und auftretende Geräusche beispielsweise durch eine Drehzahlerhöhung reduzieren. Auch ist in einem leistungsreduzierten Betrieb insgesamt durch die typischerweise höheren Pitchwinkel die Gefahr eines negativen Stalls höher.

Erfindungsgemäß umfasst der Schritt des Veränderns der Betriebsführung ein Erhöhen der Drehzahl.

Das Erhöhen der Drehzahl ermöglicht insbesondere, dass sich der kritische Anstellwinkel hin zu höheren Windgeschwindigkeiten verschieben lässt. Damit wird ein unerwünschtes Abschalten der Windenergieanlage verhindert oder zumindest verzögert.

Vorzugsweise ist der Schritt des Veränderns der Betriebsführung als Regelstrategie umgesetzt.

Die Regelstrategie kann entweder in jedem Betriebspunkt aktiv sein und den Indikator, das heißt den Pitchwinkel, überwachen. Alternativ ist vorstellbar, dass die Regelstrategie nur aktiviert wird, wenn eine Mindestwindgeschwindigkeit und/oder eine Mindestdrehzahl vorliegen. Dadurch kann die Regelung insgesamt vereinfacht werden, da weniger Parameter kontinuierlich zu überwachen sind. In diesen Bereichen ist die Verwendung der Windgeschwindigkeit als Indikator besonders ungenau.

Das erfindungsgemäße Verfahren ermöglicht somit, dass unabhängig von einer Windmessung eine wirksame Vermeidung des Auftretens eines negativen Stalls erreicht werden kann. Die Überwachung des Pitchwinkels als Indikator ermöglicht, da der Pitchwinkel präzise messbar bzw. in der Anlage als bestimmte Größe vorhanden ist, eine sehr präzise Bestimmung, ob die Gefahr eines Strömungsabrisses auf der Druckseite vorliegt oder nicht.

In einem weiteren Aspekt wird eine Windenergieanlage mit einem mit einer Drehzahl betreibbaren aerodynamischen Rotor vorgeschlagen. Der aerodynamische Rotor weist mindestens ein Rotorblatt mit einer Längsachse auf, das Rotorblatt umfassend eine Druckseite und eine der Druckseite gegenüberliegende Saugseite, und eine Pitchverstelleinheit zur rotatorischen Bewegung des Rotorblatts um die Längsachse zum Einstellen eines Pitchwinkels, eine Indikatoreinheit, die einen kritischen Wert eines Indikators für das Einsetzen einer Strömungsablösung auf der Druckseite des Rotorblattes bereitstellt, wobei der Indikator den Pitchwinkel umfasst, eine Steuerungsvorrichtung, die dazu eingerichtet ist, den Betriebspunkt der Windenergieanlage derart zu steuern, dass der Indikator unterhalb des kritischen Wertes des Indikators, der von der Indikatoreinheit bereitgestellt wird, bleibt. Vorzugsweise ist die Steuerungsvorrichtung dazu angepasst, den Pitchwinkel derart zu steuern, dass der kritische Wert des Indikators nicht überschritten wird.

Vorzugsweise ist die Indikatoreinheit dazu ausgebildet, den kritischen Wert des Indikators in Abhängigkeit einer Drehzahl des Rotors bereitzustellen, wobei die Steuerungsvorrichtung dazu angepasst ist, den Pitchwinkel und/oder die Drehzahl der Windenergieanlage derart zu steuern, dass der kritische Wert des Indikators nicht überschritten wird.

Erfindungsgemäß weist die Windenergieanlage ferner eine Abregelungseinheit zum Betreiben der Windenergieanlage in einem leistungsreduzierten Betrieb mit reduzierter Nennleistung auf, wobei die Steuerungsvorrichtung dazu angepasst ist, die Drehzahl in einem leistungsreduzierten Betrieb derart zu erhöhen, dass der Indikator unterhalb des kritischen Wertes des Indikators, der von der Indikatoreinheit bereitgestellt wird, bleibt.

Die Windenergieanlage, insbesondere deren Steuerung, ist vorteilhaft mit sämtlichen als bevorzugt beschriebenen Ausführungen des Verfahrens kombinierbar.

In einem weiteren Aspekt wird ein Windpark mit wenigstens einer erfindungsgemäßen Windenergieanlage vorgeschlagen.

Weitere Vorteile und besondere Ausgestaltungen werden nachfolgend mit Verweis auf die beigefügten Figuren beschrieben. Hierbei zeigen:
Fig. 1 schematisch und exemplarisch eine Windenergieanlage;
Fig. 2 schematisch und exemplarisch eine Drehzahl-Leistungskennlinie;
Fig. 3 schematisch und exemplarisch ein Diagramm der Pitch- und Anstellwinkel über der Windgeschwindigkeit;
Fig. 4 schematisch und exemplarisch ein weiteres Diagramm und
Fig. 5 schematisch und exemplarisch ein weiteres Diagramm.

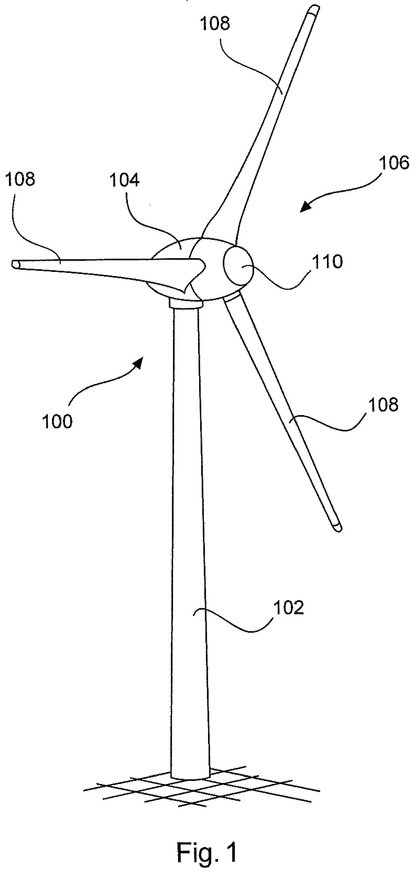

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

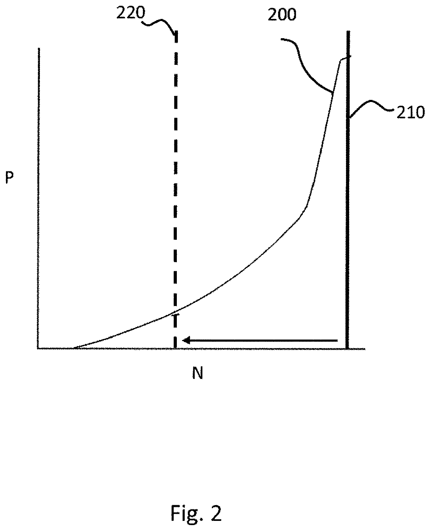

Fig. 2 zeigt schematisch und exemplarisch eine Kennlinie 200, die beispielhaft einen Zusammenhang zwischen einer Drehzahl N auf der horizontalen Achse und einer erzeugten elektrischen Leistung P auf der vertikalen Achse zeigt, wobei auch andere Kennlinien möglich sind. Leistungsreduzierte Betriebsmodi wurden entwickelt, um Anforderungen von Netzbetreibern zu erfüllen, die z.B. bei viel Windaufkommen nur gedrosselte Einspeiseleistung von Windkraftanlagen 100 oder Windparks anfragen, um eine Überlastung der Stromnetze zu verhindern. Dabei wird nach Stand der Technik auf einer Betriebskennlinie eines leistungsoptimierten Modes, wie beispielsweise der Kennlinie 200, die Drehzahl so lange reduziert bis sich das reduzierte Nennleistungsniveau einstellt. Dies hat dann zwangsläufig zur Folge, dass leistungsreduzierte Betriebsmodi stets geringere Nenndrehzahlen aufweisen als der leistungsoptimierte Modus. Die Fig. 2 zeigt schematisch Beispiele für Betriebskennlinien (BKL) eines leistungsoptimierten Betriebsmodus 210 und eines leistungsreduzierten Modus 220 für den Bereich bis zum Erreichen der Nennleistung.

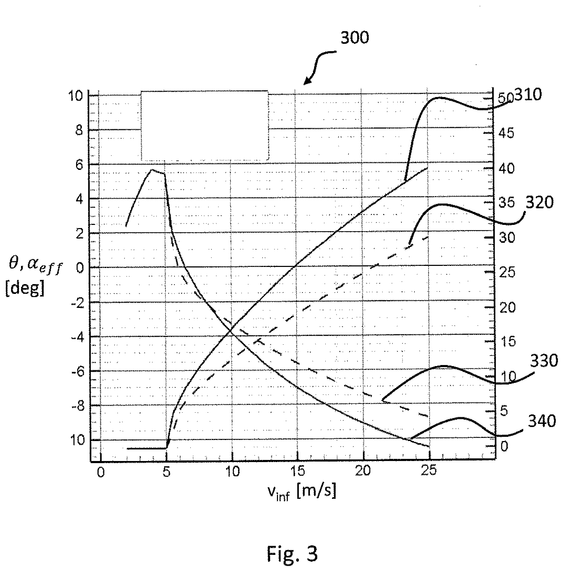

Fig. 3 zeigt schematisch und exemplarisch ein Diagramm 300 eines effektiven Anstellwinkels *α_{eff}* und eines Pitchwinkels *θ* auf der vertikalen Achse für verschiedene freie Windgeschwindigkeiten *v_{inf}* auf der horizontalen Achse. Die effektiven Anstellwinkel 330, 340 sind exemplarisch an einem Rotorblattschnitt bei 90% der Rotorblattlänge, da an dieser Stelle ein großes Risiko des Auftretens eines negativen Stalls besteht, gezeigt. Die korrespondierenden Pitchwinkel sind als Linien 310, 320 gezeigt.

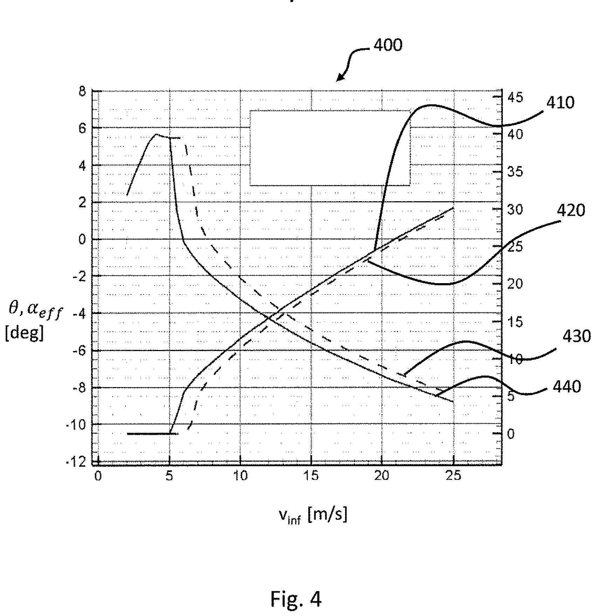

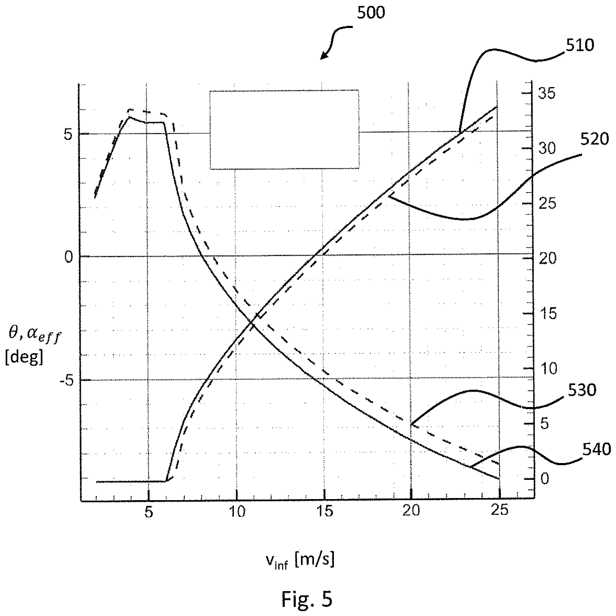

Die als beispielhaft zu verstehende Skala für den effektiven Anstellwinkel *α_{eff}* ist auf der linken Seite des Diagramms 300, die für den Pitchwinkel *θ* auf der rechten Seite des Diagramms 300 angeordnet dargestellt. Gleiches gilt für die weiteren Fig. 4 und 5.

Dem Diagramm 300 liegt eine reduzierte Nennleistung von etwa 15% der Anlagennominalleistung für zwei unterschiedliche Drehzahlen. Die durchgezogenen Linien 310 und 340 geben die Verhältnisse bei der nach Stand der Technik vorgesehenen Drehzahl für diesen abgeregelten Betriebsmode wieder, wobei die Drehzahl etwa 65% der Nominaldrehzahl Nₛₒₗₗ bei Nominalleistung beträgt. Die gestrichelten Linien 320 und 330 geben die Verhältnisse an, wenn man die Drehzahl für den auf 15% der Nominalleistung abgeregelten Mode auf Nₛₒₗₗ erhöhen würde.

Die ganze Fig. 3 bezieht sich also auf einen abgeregelten Betrieb. Während die Linien 310 für den Pitchwinkel *θ* und 340 für den daraus folgenden effektiven Anstellwinkel *α_{eff}* den Verhältnissen bei einer reduzierten Drehzahl entsprechen, wobei die reduzierte Drehzahl in Einklang mit dem üblichen Vorgehen bei einer Leistungsreduktion im abgeregelten Betrieb ist, wurde die Drehzahl für die gestrichelt gezeigten Linien 320 und 330 erhöht und zwar auf einen Wert, der im Wesentlichen der Nominaldrehzahl Nₛₒₗₗ bei Nominalleistung entspricht.

Der Informationsgehalt dieser Abbildung soll anhand einiger konkreterZahlenbeispiele verdeutlicht werden. Nimmt man zunächst an, dass der kritische Anstellwinkel an diesem Blattschnitt für das Auftreten vom negativen Stall -8° beträgt. Nach Betriebsführung nach Stand der Technik würde dann bei einer Windgeschwindigkeit von beispielsweise v=17 m/s der kritische Anstellwinkel von -8° erreicht werden. Über einen weiten Bereich von Windgeschwindigkeiten, oberhalb der Einschaltwindgeschwindigkeit von beispielsweise v=5m/s, nimmt der effektive Anstellwinkel *α_{eff}* monoton mit steigender Windgeschwindigkeit ab.

Ohne weitere Maßnahmen müsste jetzt, also bei Erreichen des kritischen effektiven Anstellwinkels *α_{eff},* die Anlage abgeschaltet werden, oder zumindest in der Drehzahl N weiter reduziert werden, wenn das Auftreten des negativen Stalls zu den unerwünschten Phänomenen wie Lärmerhöhung oder Lasterhöhungen durch aeroelastische Instabilitäten führt.

Der zugehörige kritische Pitchwinkel beträgt in diesem Falle beispielsweise etwa 29°. Erhöht man nun die Drehzahl auf beispielsweise Nₛₒₗₗ, so wird der kritische Anstellwinkel von -8° erst bei 22 m/s erreicht, also erst bei höheren Windgeschwindigkeiten. Dies zeigt sich dadurch, dass die gestrichelt gezeigte Linie 330 einen bestimmten Wert des Anstellwinkels erst bei einer höheren Windgeschwindigkeit, in der Zeichnung also weiter rechts, als die durchgehend gezeigte Linie 340 für die reduzierte Drehzahl erreicht.

Um welchen Betrag die Windgeschwindigkeit, bei der der kritische Anstellwinkel nach der Drehzahlerhöhung erreicht wird, steigt, hängt vom verwendeten Profil an diesem Blattschnitt ab. Liegt der kritische Anstellwinkel beispielsweise bei -9°, so steigt die kritische Windgeschwindigkeit von 19,5 m/s auf >25 m/s, also ggf. in einen Bereich der Sturmregelung, in dem Drehzahl und Leistung abgesenkt werden. Liegt der kritische Anstellwinkel bereits bei -4°, so steigt die kritische Windgeschwindigkeit marginal von 10 m/s auf etwas über 11 m/s, womit Maßnahmen wie Abschaltung nur unwesentlich hinausgezögert werden.

Kehrt man zur eingangs angeführten Annahme mit einem kritischen Anstellwinkel von -8° zurück und unterstellt weiterhin konstante Windgeschwindigkeit, dann erkennt man in Fig. 3, dass sich durch die Drehzahlerhöhung der Anstellwinkel von -8° auf etwa -6.5° erhöht und sich damit vom negativen stall wegbewegt. Der Pitchwinkel reduziert sich beispielsweise von 29° auf etwa 22°, was ein Vergleich der Linien 310 und 320 ergibt.

Bis der Anstellwinkel bei erhöhter Drehzahl Nₛₒₗₗ bei 22 m/s wieder die kritische Marke von -8° erreicht, erhöht sich der Pitchwinkel auf etwa 27°, d.h. der kritische Pitchwinkel nimmt mit ansteigender Drehzahl leicht ab, in dem Zahlenbeispiel von 29° auf 27°. Der kritische Pitchwinkel ist also vorzugsweise mindestens eine Funktion der Drehzahl. Die Abhängigkeit vom Leistungsniveau des abgeregelten Modus soll im Folgenden beleuchtet werden.

Fig. 4 zeigt ein Diagramm 400, das die gleichen Achsen wie das Diagramm 300 der Fig. 3 hat. Pitch- und Anstellwinkel sind am Rotorblatt-Querschnitt bei 90% Radius für zwei auf 15% bzw. 25% der Nennleistung abgeregelte Betriebsmodi bei einer Drehzahlerhöhung auf die Solldrehzahl Nₛₒₗₗ gezeigt. Linien 410 und 420 entsprechen demnach dem Pitchwinkelverlauf mit auf 15% bzw. 25% der Nennleistung abgeregeltem Betrieb. Linien 430 und 440 zeigen entsprechend den Verlauf der effektiven Anstellwinkel, wobei durchgezogene Linien 410, 440 zu dem auf 15% der Nennleistung reduzierten Betrieb und die gestrichelte Linien 420, 430 zu dem auf 25% der Nennleistung reduzierten Betrieb gehören.

Im Falle des 15% Modus wird negativer Stall unter der beispielhaften Annahme des kritischen Anstellwinkels bei -8° bei einer Windgeschwindigkeit von 22 m/s bei einem Pitchwinkel von 27° erreicht. Im Falle des 25% Modus bei etwa 23.5 m/s und einem Pitchwinkel von 28°. An diesem Beispiel wird deutlich, dass der kritische Pitchwinkel als Indikator für negativen Stall in leistungsreduzierten Betriebsmodi abhängig vom jeweiligen Leistungsniveau ist. Insofern die Unterschiede im Praxisfall als gering bewertet werden, kann der kleinere der beiden kritischen Pitchwinkel für beide Modi verwendet werden, was die Steuerung vereinfacht.

Eine weitere Unsicherheit bei der Verwendung des Pitchwinkels als Indikator stellen die veränderten Profileigenschaften durch Verschmutzung dar. Zum einen kann sich der Anstellwinkelwinkel ändern, bei dem negativer Stall auftritt. In vielen Praxisfällen ist diese Veränderung sehr klein, so dass eine einzige Stall-Grenze für verschiedene Profil-Verschmutzungsgrade definiert werden kann. Zum anderen ergibt sich für die veränderten Profileigenschaften eine veränderte Pitchführung.

Fig. 5 zeigt ein Diagramm 500, das die gleichen Achsen wie das Diagramm 300 der Fig. 3 hat. Linien 510 und 520 entsprechen einem Verlauf der Pitchwinkel über die Windgeschwindigkeit für einen auf 25% der Nennleistung reduzierten Betrieb, Linien 530 und 540 die zugehörigen effektiven Anstellwinkel. Zu den durchgezogenen Linien 510 und 540 gehört ein sauberes Profil und zu den Linien 520 und 530 ein verschmutztes Profil.

Aus Fig. 5 lässt sich entnehmen, dass der kritische Anstellwinkel von -8° für saubere Strömungsprofile (clean) bei etwa 21,5 m/s Windgeschwindigkeit und 29,5° Pitchwinkel erreicht wird. Für verschmutze Profile (tripped) ändern sich diese Werte auf 23,5 m/s bzw. 31° Grad. Der Unterschied von 29,5° und 31° ließe sich im Praxisfall erneut umgehen, indem der kleinere der beiden Pitchwinkel für beide Fälle als der kritische definiert werden kann.

Nimmt man darüber hinaus eine durch die Verschmutzung der Profile verursachte Verschiebung der Stallgrenze, also des kritischen Anstellwinkels, von -8° auf-7° an, so ändern sich die Wertepaare für negativen Stall auf 27,5° Pitch bei 20 m/s. Der kritische Pitchwinkel könnte in diesem Fall unabhängig von der Profileigenschaft auf 27,5° festgelegt werden.

Das saubere Blatt würde dann bereits bei einer Windgeschwindigkeit von etwa 20 m/s anstelle von 21,5 m/s eine entsprechende Regelstrategie, wie der Drehzahlerhöhung, auslösen. Es ist demnach bevorzugt, dass Profiloberflächenzustände wie Verschmutzung bei der Wahl der Definition kritischer Pitchwinkel berücksichtigt werden. Es ist allerdings möglich, dass es in einem Praxisfall ausreicht, einen Pitchwinkel für alle Profilzustände zu definieren.

Die Erfindung kann bei allen pitchgeregelten, drehzahlvariablen Windenergieanlagen angewendet werden, die in der Lage sind, den Pitchwinkel zu erfassen.

## Patentansprüche

1. Verfahren zum Betreiben einer Windenergieanlage (100), umfassend
- Bereitstellen eines kritischen Wertes eines Indikators für das Auftreten einer Strömungsablösung auf einer Druckseite eines Rotorblattes (108) eines Rotors (106) der Windenergieanlage (100), wobei der Indikator einen Pitchwinkel des Rotorblattes (108) umfasst,
- Verändern einer Betriebsführung der Windenergieanlage (100) unter Verwendung des Indikators,
**dadurch gekennzeichnet, dass** die Windenergieanlage (100) in einem leistungsreduzierten Betrieb mit reduzierter Nennleistung betrieben wird, wobei der Schritt des Veränderns der Betriebsführung ein Erhöhen der Drehzahl (N) umfasst, derart, dass der Indikator unterhalb des bereitgestellten, kritischen Wertes des Indikators bleibt.

2. Verfahren nach Anspruch 1, wobei der Pitchwinkel gemessen oder bestimmt wird, insbesondere durch eine eingestellte Position einer Pitchverstelleinrichtung bestimmt wird.

3. Verfahren nach einem der vorstehenden Ansprüche,
wobei für mehrere Betriebspunkte der Windenergieanlage (100), insbesondere für mehrere Drehzahlen (N) der Windenergieanlage (100), ein kritischer Wert des Indikators, bei dem das Auftreten der Strömungsablösung auf der Druckseite einsetzt, bereitgestellt wird und das Verfahren weiter umfasst:
- Vergleichen eines aktuellen Indikatorwertes mit einem kritischen Indikatorwert für den aktuellen Betriebspunkt, wobei der Schritt des Veränderns der Betriebsführung erfolgt, sobald eine Differenz zwischen dem Indikatorwert und dem kritischen Indikatorwert einen vorbestimmten Sicherheitswert unterschreitet, wobei die kritischen Werte des Indikators vorzugsweise aufgrund einer Anstellwinkelverteilung des Rotorblattes (108) und einem kritischen Anstellwinkel bestimmt werden,
wobei der kritische Indikatorwert einem kritischen Pitchwinkel entspricht.

4. Verfahren nach Anspruch 3, wobei der kritische Indikatorwert mit ansteigender Drehzahl (N) des Rotors (106) abnimmt.

5. Verfahren nach einem der vorstehenden Ansprüche 3 bis 4, wobei der kritische Indikatorwert unabhängig von einer Höhe der reduzierten Nennleistung in einem abgeregelten Betrieb festgelegt ist und/oder mit steigender Abregelung ansteigt.

6. Verfahren nach einem der Ansprüche 3 bis 5, wobei der kritische Indikatorwert in Abhängigkeit eines Profiloberflächenzustandes des Rotorblattes (108), insbesondere einer Verschmutzung, bereitgestellt wird.

7. Verfahren nach einem der vorstehenden Ansprüche, wobei der Indikator das Auftreten der Strömungsablösung in einem Außenbereich des Rotorblattes (108) anzeigt, insbesondere in einem äußeren Bereich, der mehr als 70 % des Rotorradius, insbesondere mehr als 90 % des Rotorradius von einem Zentrum des Rotors (106) aus entfernt ist.

8. Verfahren nach einem der vorstehenden Ansprüche, wobei der Schritt des Veränderns der Betriebsführung als Regelstrategie umgesetzt ist.

9. Windenergieanlage (100), mit einem mit einer Drehzahl betreibbaren aerodynamischen Rotor (106),
wobei der aerodynamische Rotor (106) mindestens ein Rotorblatt (108) mit einer Längsachse aufweist, das Rotorblatt (108) umfassend
- eine Druckseite und eine der Druckseite gegenüberliegende Saugseite, und
- eine Pitchverstelleinheit zur rotatorischen Bewegung des Rotorblatts (108) um die Längsachse zum Einstellen eines Pitchwinkels,
eine Indikatoreinheit, die einen kritischen Wert eines Indikators für das Einsetzen einer Strömungsablösung auf der Druckseite des Rotorblattes bereitstellt, wobei der Indikator den Pitchwinkel umfasst,
eine Steuerungsvorrichtung, die dazu eingerichtet ist, den Betriebspunkt der Windenergieanlage (100) derart zu steuern, dass der Indikator unterhalb des kritischen Wertes des Indikators, der von der Indikatoreinheit bereitgestellt wird, bleibt,
**dadurch gekennzeichnet, dass** die Windenergieanlage eine Abregelungseinheit zum Betreiben der Windenergieanlage in einem leistungsreduzierten Betrieb mit reduzierter Nennleistung umfasst, wobei die Steuerungsvorrichtung dazu angepasst ist, die Drehzahl in einem leistungsreduzierten Betrieb derart zu erhöhen, dass der Indikator unterhalb des kritischen Wertes des Indikators, der von der Indikatoreinheit bereitgestellt wird, bleibt.

10. Windenergieanlage (100) nach Anspruch 9, wobei die Steuerungsvorrichtung dazu angepasst ist, den Pitchwinkel derart zu steuern, dass der kritische Wert des Indikators nicht überschritten wird.

11. Windenergieanlage (100) nach Anspruch 9 oder 10, wobei die Indikatoreinheit dazu ausgebildet ist, den kritischen Wert des Indikators in Abhängigkeit einer Drehzahl des Rotors bereitzustellen,
wobei die Steuerungsvorrichtung dazu angepasst ist, den Pitchwinkel und/ oder die Drehzahl der Windenergieanlage (100) derart zu steuern, dass der kritische Wert des Indikators nicht überschritten wird.

12. Windpark mit wenigstens einer Windenergieanlage (100) nach einem der Ansprüche 9 bis 11.

## Claims

1. Method for operating a wind turbine (100), comprising
- providing a critical value of an indicator for the occurrence of a flow separation on a pressure side of a rotor blade (108) of a rotor (106) of the wind turbine (100), wherein the indicator comprises a pitch angle of the rotor blade (108),
- changing an operational management of the wind turbine (100) using the indicator,
**characterized by** the wind turbine (100) being operated with reduced nominal power level in a reduced power mode and the step of changing the operational management comprises increasing the rotation speed (N) such that the critical value of the indicator is not exceeded.

2. Method according to claim 1, wherein the pitch angle is measured or determined, in particular determined by a set position of a pitch adjustment device.

3. Method according to one of the preceding claims,
wherein for several operating points of the wind turbine (100), in particular for several rotation speeds (N) of the wind turbine (100), a critical value of the indicator is provided at which the occurrence of flow separation on the pressure side begins, and the method furthermore comprises:
- comparing a current indicator value with a critical indicator value for the current operating point, wherein the step of changing the operational management takes place as soon as a difference between the indicator value and the critical indicator value falls below a predefined safety value, wherein the critical value of the indicator is preferably determined on the basis of a distribution of angles of attack of the rotor blades (108) and a critical angle of attack,
wherein the critical indicator value corresponds to a critical pitch angle.

4. Method according to claim 3, wherein the critical indicator value diminishes as the rotation speed (N) of the rotor (106) increases.

5. Method according to any of the preceding claims 3 to 4, wherein the critical indicator value is established independently of a level of reduced nominal power in a restricted operating mode, and/or rises as the degree of restriction increases.

6. Method according to any of the preceding claims 3 to 5, wherein the critical indicator value is provided as a function of a profile surface state of the rotor blade (108), in particular a soiling.

7. Method according to any of the preceding claims, wherein the indicator indicates the occurrence of the flow separation in an outer region of the rotor blade (108), in particular in an outer region which lies more than 70% of the rotor radius, in particular more than 90% of the rotor radius, away from a centre of the rotor (106).

8. Method according to any of the preceding claims, wherein the step of changing the operational management is implemented as a control strategy.

9. Wind turbine (100) with an aerodynamic rotor (106) which can be operated with a rotation speed,
wherein the aerodynamic rotor (106) comprises at least one rotor blade (108) with a longitudinal axis, the rotor blade (108) comprising
- a pressure side and a suction side opposite the pressure side, and
- a pitch adjustment unit for rotational movement of the rotor blade (108) about the longitudinal axis for setting a pitch angle,
an indicator unit which provides a critical value indicator for the onset of a flow separation on the pressure side of the rotor blade, wherein the indicator comprises the pitch angle,
a control device which is configured to control the operating point of the wind turbine (100) such that the indicator remains below the critical value of the indicator which is provided by the indicator unit
**characterized by** the wind turbine (100) further comprising a restriction unit for operating the wind turbine in a reduced power mode with reduced nominal power level, wherein the control device is designed to increase the rotation speed in a reduced power mode such that the indicator remains below the critical value of the indicator which is provided by the indicator unit.

10. Wind turbine (100) according to claim 9, wherein the control device is designed to control the pitch angle such that the critical value of the indicator is not exceeded.

11. Wind turbine (100) according to claim 9 or 10, wherein the indicator unit is configured to provide the critical value of the indicator as a function of a rotation speed of the rotor,
wherein the control device is designed to control the pitch angle and/or the rotation speed of the wind turbine (100) such that the critical value of the indicator is not exceeded.

12. Wind park with at least one wind turbine (100) according to any of claims 9 to 11.

## Revendications

1. Procédé de fonctionnement d'une éolienne (100) comprenant
- la fourniture d'une valeur critique d'un indicateur pour la survenue d'un décrochement de filet d'air sur un intrados d'une pale de rotor (108) d'un rotor (106) de l'éolienne (100), dans lequel l'indicateur comporte un angle de calage de la pale de rotor (108),
- la modification d'une conduite d'exploitation de l'éolienne (100) en utilisant l'indicateur,
**caractérisé en ce que** l'éolienne (100) va fonctionner dans un mode à puissance réduite avec une puissance nominale réduite, dans lequel l'étape de la modification de la conduite d'exploitation comporte une augmentation de la vitesse de rotation (N) de telle manière que l'indicateur reste en dessous de la valeur critique fournie de l'indicateur.

2. Procédé selon la revendication 1, dans lequel l'angle de calage est mesuré ou déterminé, en particulier est déterminé par une position réglée d'un dispositif de réglage de calage.

3. Procédé selon l'une des revendications précédentes,
dans lequel, pour plusieurs points de fonctionnement de l'éolienne (100), en particulier pour plusieurs vitesses de rotation (N) de l'éolienne (100), une valeur critique de l'indicateur, pour lequel la survenue de décrochement de filet d'air sur l'intrados est utilisée, est fournie, et le procédé comporte en outre :
- la comparaison d'une valeur d'indicateur actuelle avec une valeur d'indicateur critique pour le point de fonctionnement actuel, dans lequel l'étape de modification de la conduite d'exploitation est effectuée, dès qu'une différence entre la valeur d'indicateur et la valeur d'indicateur critique n'atteint pas une valeur de sécurité prédéterminée, dans lequel les valeurs critiques de l'indicateur sont de préférence déterminées en raison d'une répartition d'angle d'attaque de la pale de rotor (108) et d'un angle d'attaque critique,
dans lequel la valeur d'indicateur critique correspond à un angle de calage critique.

4. Procédé selon la revendication 3, dans lequel la valeur d'indicateur critique diminue lorsque la vitesse de rotation (N) du rotor (106) croît.

5. Procédé selon l'une des revendications précédentes 3 à 4, dans lequel la valeur d'indicateur critique est fixée indépendamment d'une hauteur de la puissance nominale réduite dans un fonctionnement régulé et/ou augmente lorsqu'une régulation croît.

6. Procédé selon l'une des revendications 3 à 5, dans lequel la valeur d'indicateur critique est fournie en fonction d'un état de surface de profil de la pale de rotor (108), en particulier d'une salissure.

7. Procédé selon l'une des revendications précédentes, dans lequel l'indicateur affiche la survenue du décrochement de filet d'air dans une zone extérieure de la pale de rotor (108), en particulier dans une zone extérieure qui est éloignée de plus de 70 % du rayon de rotor, en particulier de plus de 90 % du rayon de rotor depuis un centre du rotor (106).

8. Procédé selon l'une des revendications précédentes, dans lequel l'étape de modification de la conduite d'exploitation est mise en œuvre comme stratégie de régulation.

9. Eolienne (100) avec un rotor (106) aérodynamique pouvant fonctionner avec une vitesse de rotation,
dans laquelle le rotor aérodynamique (106) présente au moins une pale de rotor (108) avec un axe longitudinal, la pale de rotor (108) comprenant
- un intrados et un extrados opposé à l'intrados, et
- une unité de réglage de calage pour le mouvement rotatif de la pale de rotor (108) autour de l'axe longitudinal pour le réglage d'un angle de calage,
une unité d'indicateur qui fournit une valeur critique d'un indicateur pour l'utilisation d'un décrochement de filet d'air sur l'intrados de la pale de rotor, dans lequel l'indicateur comporte l'angle de calage,
un dispositif de commande qui est conçu afin de commander le point de fonctionnement de l'éolienne (100) de telle manière que l'indicateur reste en dessous de la valeur critique de l'indicateur qui est fournie par l'unité d'indicateur,
**caractérisée en ce que** l'éolienne comporte une unité de régulation pour le fonctionnement de l'éolienne dans un fonctionnement à puissance réduite avec une puissance nominale réduite, dans lequel le dispositif de commande est adapté afin d'augmenter la vitesse de rotation dans un fonctionnement à puissance réduite de telle manière que l'indicateur reste en dessous de la valeur critique de l'indicateur qui est fournie par l'unité d'indicateur.

10. Eolienne (100) selon la revendication 9, dans laquelle le dispositif de commande est adapté afin de commander l'angle de calage de telle manière que la valeur critique de l'indicateur ne soit pas dépassée.

11. Eolienne (100) selon la revendication 9 ou 10, dans laquelle l'unité d'indicateur est réalisée afin de fournir la valeur critique de l'indicateur en fonction d'une vitesse de rotation du rotor,
dans laquelle le dispositif de commande est adapté afin de commander l'angle de calage et/ou la vitesse de rotation de l'éolienne (100) de telle manière que la valeur critique de l'indicateur ne soit pas atteinte.

12. Parc éolien avec au moins une éolienne (100) selon l'une des revendications 9 à 11.
